# EUROPEAN PATENT APPLICATION

(11) **EP 4 102 044 A2**
(43) Date of publication of application: **14.12.2022**
(21) Application number: 22178775.7
(22) Date of filing: 13.06.2022
(51) Int. Cl.: F02C 7/36, F02K 5/00

(54) **HYBRID ELECTRIC ENGINE POWER DISTRIBUTION**

(30) Priority: 11.06.2021 US 202117345626
(71) Applicant: Raytheon Technologies Corporation, Farmington, CT 06032 (US)
(72) Inventor: MULDOON, Marc J., Marlborough, 06447 (US); RAMSEY, Christopher D., Glastonbury, 06033 (US); WOOD, Coy Bruce, Ellington, 06029 (US); SMITH, Lance L., West Hartford, 06117 (US)
(74) Representative: Dehns

(57) **Abstract**

A computer-implemented method includes monitoring a hybrid electric turbine engine (220) of an aircraft (200), the hybrid electric turbine engine including a first electric machine (240,) associated with a high speed spool (230) and a second electric machine (242) associated with a low speed spool (232). The method further includes receiving an indication of a failed electric machine (241, 243), the failed electric machine being an electric machine on another hybrid electric turbine engine (221) of the aircraft (200), and, responsive to detecting the failed electric machine, distributing power from one or more of the first electric machine or the second electric machine to a spool (231, 233) associated with the failed electric machine.

## Description

### BACKGROUND

The subject matter disclosed herein generally relates to turbine engines and, more particularly, to hybrid electric engine power distribution.

A hybrid electric gas turbine engine (or simply "hybrid electric engine") can use electricity and/or liquid fuel (e.g., jet fuel) to provide thrust to an aircraft. Hybrid electric engines can selectively use electricity or fuel or both, depending, for example, on a flight stage, environmental conditions, and other concerns. For example, during times that require significant thrust (e.g., take off, climb, etc.), it may be more efficient to use liquid fuel to power the hybrid electric engine. However, at other times that require less thrust (e.g., taxi, cruise, descent, etc.), it may be more efficient to use electricity to power the hybrid electric engine. At other times, such as during transients when thrust is rapidly increased, it may be advantageous to use both fuel and electricity to generate shaft-torque or thrust.

### BRIEF DESCRIPTION

According to one aspect, a method is provided that includes monitoring a hybrid electric turbine engine of an aircraft, the hybrid electric turbine engine comprising a high speed spool electric machine associated with a high speed spool and a low speed spool electric machine associated with a low speed spool. The method further includes redetermining that an electric machine is a failed electric machine, the failed electric machine being an electric machine on another hybrid electric turbine engine of the aircraft. The method further includes, responsive to detecting the failed electric machine, distributing power from one or more of the first electric machine or the second electric machine to a spool associated with another hybrid electric turbine engine of the aircraft.

In addition to one or more of the features described above or below, or as an alternative, further embodiments may include that the monitoring comprises monitoring multiple hybrid electric turbine engines of the aircraft by one or more hybrid electric controllers, wherein each of the multiple hybrid electric turbine engines comprises a high speed spool electric machine associated with a high speed spool and a low speed spool electric machine associated with a low speed spool.

In addition to one or more of the features described above or below, or as an alternative, further embodiments may include that distributing the power further includes: responsive to the failed electric machine being the high speed spool electric machine, distributing power from the low speed spool electric machine of the same hybrid electric turbine engine.

In addition to one or more of the features described above or below, or as an alternative, further embodiments may include that distributing the power further includes: responsive to the failed electric machine being the high speed spool electric machine, distributing power from a low speed spool electric machine of another hybrid electric turbine engine.

In addition to one or more of the features described above or below, or as an alternative, further embodiments may include that distributing the power further includes: responsive to the failed electric machine being the high speed spool electric machine, distributing power from the low speed spool electric machine of the same hybrid electric turbine engine and from a low speed spool electric machine of another hybrid electric turbine engine.

In addition to one or more of the features described above or below, or as an alternative, further embodiments may include that distributing the power further includes: responsive to the failed electric machine being the high speed spool electric machine, distributing power from the low speed spool electric machine of same hybrid electric turbine engine and from a low speed spool electric machine and a high speed spool electric machine of another hybrid electric turbine engine.

In addition to one or more of the features described above or below, or as an alternative, further embodiments may include that distributing the power further includes: responsive to the failed electric machine being the low speed spool electric machine, distributing power from the high speed spool electric machine of the same hybrid electric turbine engine.

In addition to one or more of the features described above or below, or as an alternative, further embodiments may include that distributing the power further includes: responsive to the failed electric machine being the low speed spool electric machine, distributing power from a low the speed spool electric machine of another hybrid electric turbine engine.

In addition to one or more of the features described above or below, or as an alternative, further embodiments may include that distributing the power further includes: responsive to the failed electric machine being the low speed spool electric machine, distributing power from the high speed spool electric machine of the same hybrid electric turbine engine and from a low speed spool electric machine of another hybrid electric turbine engine.

In addition to one or more of the features described above or below, or as an alternative, further embodiments may include that distributing the power further includes: responsive to the failed electric machine being one of the low speed spool electric machines, distributing power from high speed spool electric machine of same hybrid electric turbine engine and from high speed spool electric machine of another of the multiple hybrid electric turbine engines.

In addition to one or more of the features described above or below, or as an alternative, further embodiments may include detecting that one of the multiple hybrid electric turbine engines is shut down, and distributing second power to the one of the multiple hybrid electric turbine engines that is shut down from at least one other electric machine from at least one of the multiple hybrid electric turbine engines that is not shut down.

In addition to one or more of the features described above or below, or as an alternative, further embodiments may include that the one of the multiple hybrid electric turbine engines that is shut down uses the second power from at least one other electric machine of another of the multiple hybrid electric turbine engines that is not shut down to feed a fan of the one of the multiple hybrid electric turbine engines that is shut down.

In addition to one or more of the features described above or below, or as an alternative, further embodiments may include that the one of the multiple hybrid electric turbine engines that is shut down uses the second power from at least one other electric machine of another of the multiple hybrid electric turbine engines that is not shut down to restart the one of the multiple hybrid electric turbine engines that is shut down.

In addition to one or more of the features described above or below, or as an alternative, further embodiments may include that the second power from at least one other electric machine of another of the multiple hybrid electric turbine engines that is not shut down is used instead of power from an air turbine starter.

In addition to one or more of the features described above or below, or as an alternative, further embodiments may include that the detecting the failed electric machine is performed by a controller associated with the aircraft.

According to another aspect, a computer program product is provided that comprises instructions which, when the program is executed by a processor, cause the processor to perform a method according to any or all of the above (e.g. as claimed in any of claims 1 to 12).

According to another aspect, a system is provided that includes a first hybrid electric engine comprising a first electric machine associated with a first shaft and a second electric machine associated with a second shaft. The system further includes a second hybrid electric engine comprising a third electric machine associated with a third shaft and a fourth electric machine associated with a fourth shaft. The system further includes a controller. The controller can identify a failed electric machine, the failed electric machine being one of the first electric machine, the second electric machine, the third electric machine, or the fourth electric machine. The controller can further cause power to be distributed from at least one of the first electric machine, the second electric machine, the third electric machine, or the fourth electric machine other than the failed electric machine to another of the first electric machine, the second electric machine, the third electric machine and the fourth electric machine other than the failed electric machine.

In addition to one or more of the features described above or below, or as an alternative, further embodiments may include a bus to transmit data and received data among the controller, the first electric machine, the second electric machine, the third electric machine, and the fourth electric machine.

In addition to one or more of the features described above or below, or as an alternative, further embodiments may include that the controller is further configured to perform an engine restart on at least one of the first hybrid electric engine or the second hybrid electric engine responsive to detecting that the respective first hybrid electric engine or the second hybrid electric engine has experienced a shutdown.

According to another aspect, a controller is provided that includes processing circuitry. The processing circuitry can monitor multiple hybrid electric turbine engines of an aircraft, each of the multiple hybrid electric turbine engines including a first electric machine associated with a high speed spool and a second electric machine associated with a low speed spool. The processing circuitry can further detect a failed electric machine, the failed electric machine being one of the first electric machine or the second electric machine associated with one of the multiple hybrid electric turbine engines. The processing circuitry can further, responsive to detecting the failed electric machine, distribute power from at least one other electric machine of the multiple hybrid electric turbine engines to a spool associated with another electric machine other than the failed electric machine.

In addition to one or more of the features described above or below, or as an alternative, further embodiments may include that to distribute the power further includes: responsive to the failed electric machine being one of the high speed spool electric machines, distributing power from the low speed spool electric machine of the same hybrid electric turbine engine.

In addition to one or more of the features described above or below, or as an alternative, further embodiments may include that to distribute the power further includes responsive to the failed electric machine being one of the high speed spool electric machines, distributing power from the low speed spool electric machine of another of the multiple hybrid electric turbine engines.

In addition to one or more of the features described above or below, or as an alternative, further embodiments may include that to distribute the power further includes responsive to the failed electric machine being one of the high speed spool electric machines, distributing power from the low speed spool electric machine of the same hybrid electric turbine engine and from the low speed spool electric machine of another of the multiple hybrid electric turbine engines.

In addition to one or more of the features described above or below, or as an alternative, further embodiments may include that to distribute the power further includes responsive to the failed electric machine being one of the high speed spool electric machines, distributing power from the low speed spool electric machine of same hybrid electric turbine engine and from the low speed spool electric machine and the high speed spool electric machine of another of the multiple hybrid electric turbine engines.

In addition to one or more of the features described above or below, or as an alternative, further embodiments may include that to distribute the power further includes: distributing power to the failed electric machine from one or more of the high speed spool electric machines, alone or together.

### BRIEF DESCRIPTION OF THE DRAWINGS

The following descriptions should not be considered limiting in any way. With reference to the accompanying drawings, like elements are numbered alike:
FIG. 1A is a partial cross-sectional view of a gas turbine engine;
FIG. 1B is a partial cross-sectional view of a hybrid electric gas turbine engine according to one or more embodiments described herein;
FIG. 2 is a block diagram of a system supporting hybrid electric engine power distribution according to one or more embodiments described herein; and
FIG. 3 is a flow chart illustrating a method according to one or more embodiments described herein.

### DETAILED DESCRIPTION

A detailed description of one or more embodiments of the disclosed apparatus, system, and method are presented herein by way of exemplification and not limitation with reference to the Figures.

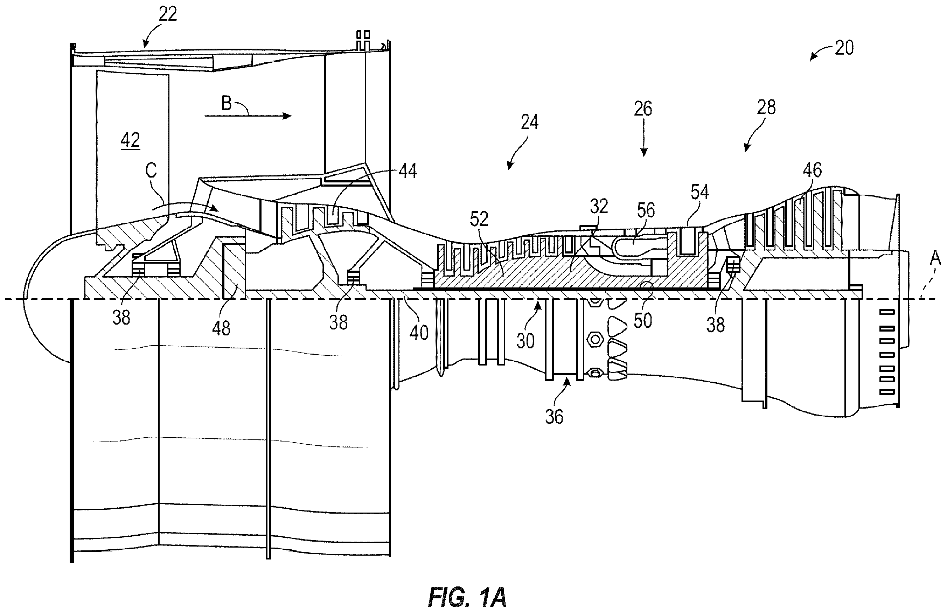

FIG. 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6:1), with an example embodiment being greater than about ten (10:1), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3: 1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]0.5. The "Low corrected fan tip speed" as disclosed herein according to one non-limiting embodiment is less than about 1150 ft/second (350.5 m/sec).

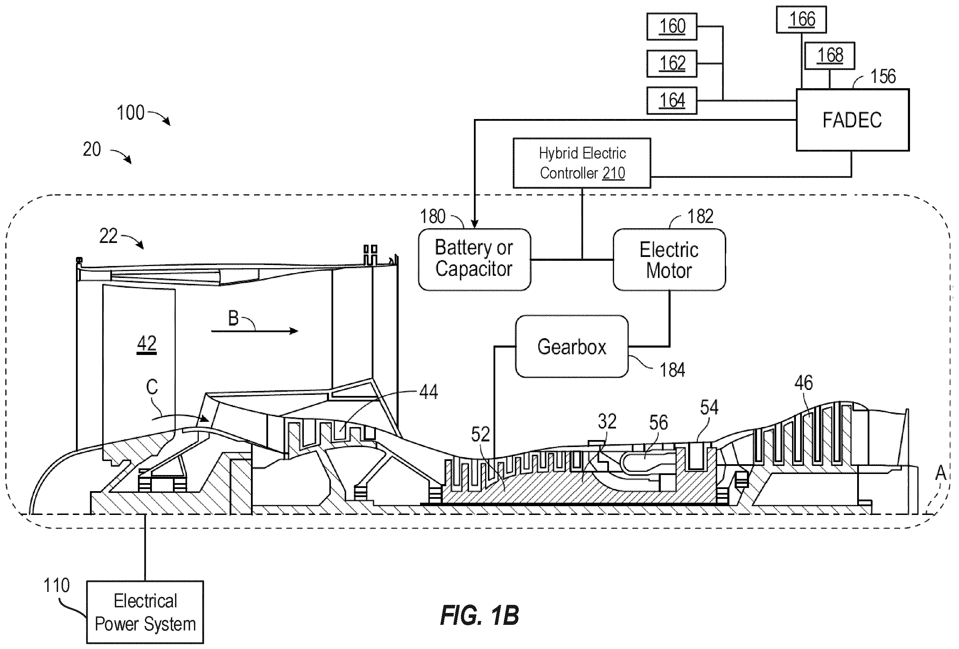

FIG. 1B is a partial cross-sectional view of a hybrid electric gas turbine engine (also referred to as hybrid electric propulsion system 100) according to one or more embodiments described herein. The hybrid electric propulsion system 100 (also referred to as hybrid electric gas turbine engine 100) includes the gas turbine engine 20 operably coupled to an electrical power system 110 as part of a hybrid electric aircraft in accordance with one non-limiting embodiment of the present disclosure. In this embodiment, the engine 20 has a power source 180 such as a battery, a super capacitor, an ultra-capacitor or an equivalent thereof, which supplies power to a motor 182, which is connected to an engine accessory gearbox 184 that is operably coupled to the high speed spool 32 such that the motor 182, when operated will provide power assist to the high speed spool 32 via the accessory gearbox 184. In other words, the accessory gearbox will have at least one component (e.g., a gear train or other equivalent device) operably coupled to the high speed spool 32 and the motor 182 such that operation of the motor 182 will rotate the component which in turn will rotate the high speed spool 32. The power assist to the high speed spool 32 via the motor 182 will add enough stability to the high pressure compressor in order to allow, for example, re-starting without external power assist which may be provided by an auxiliary power unit (APU).

In one non-limiting embodiment, the motor 182 may be configured to provide power assist to the high speed spool 32. Alternatively, the motor 182 may be part of a different configuration or system configured to only provide power assist to the high speed spool 32 in order to expand an in-flight re-start envelope. In yet another example, the motor 182 may be configured to provide power assist to the low speed spool 30. For example, in an alternative embodiment, the motor 182 may be operatively coupled to the low speed spool 30 via accessory gearbox 184 in order to provide additional thrust to the engine 20. According to one or more examples, each of the low speed spool 30 and the high speed spool 32 can have a dedicated motor (e.g., the motor 182) operatively coupled thereto via a dedicated gearbox (e.g., the gearbox 184).

According to an embodiment, the power source 180 and the motor 182 are under the full authority of a full authority digital engine control (FADEC) 156, which controls the power source and the engine. The FADEC 156 is an example of a controller that can include a processing system 160, a memory system 162, and an input/output interface 164. The processing system 160 can include any type or combination of central processing unit (CPU), including one or more of: a microprocessor, a digital signal processor (DSP), a microcontroller, an application specific integrated circuit (ASIC), a field programmable gate array (FPGA), or the like. Thus, the FADEC 156 can be said to include processing circuitry. The memory system 162 can store data and instructions that are executed by the processing system 160. In embodiments, the memory system 162 may include random access memory (RAM), read only memory (ROM), or other electronic, optical, magnetic, or any other computer readable medium onto which is stored data and algorithms in a non-transitory form. The input/output interface 164 is configured to collect sensor data from the one or more system sensors and interface with various components and subsystems, such as components of motor drive electronics, rectifier electronics, an energy storage management system, an integrated fuel control unit, actuators, and/or other components of the hybrid electric propulsion system 100. The FADEC 156 provides a means for controlling hybrid electric system control effectors 168 based on a power transfer control 166 that is dynamically updated during operation of the hybrid electric propulsion system 100. The means for controlling the hybrid electric system control effectors 168 can be otherwise subdivided, distributed, or combined with other control elements.

The FADEC 156 can also include various operational controls, such as a power transfer control that controls hybrid electric system control effectors. The power transfer control 166 can apply control laws and access/update models to determine how to control and transfer power to and from the hybrid electric system control effectors 168. For example, sensed and/or derived parameters related to speed, flow rate, pressure ratios, temperature, thrust, and the like can be used to establish operational schedules and transition limits to maintain efficient operation of the gas turbine engine 20.

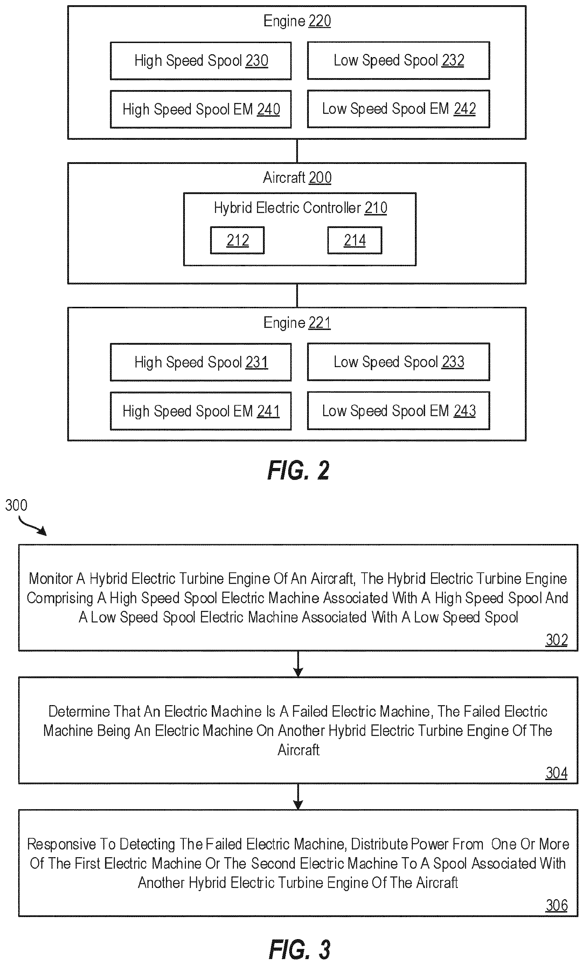

Additionally or alternatively, the hybrid electric propulsion system 100 can include a hybrid electric controller 210, which may be integrated into or separate from the FADEC 156. The hybrid electric controller 210 is communicatively coupled to the power source 180, the motor 182, and/or any other suitable components. The features and functionality of the hybrid electric controller 210 are described in more detail herein with respect to FIG. 2.

As shown in FIG. 1B, the lines connecting the components (e.g., the hybrid electric controller 210, the FADEC 156, the electric motor 182, etc.) form a bus (i.e., a communication bus) for transmitting/receiving data among the components. For example, one or more of the components can include a receiver for receiving data, a transmitter for transmitting data, and/or a transceiver for transmitting and receiving data via the bus.

An aircraft can selectively power a hybrid electric engine, such as the hybrid electric gas turbine engine 100 of FIG. 1B, by providing electric power from a battery source and/or liquid fuel (jet fuel). During certain stages during a flight plan (e.g., taxi, cruise), electric power may be more efficient. However, during other stages (e.g., takeoff, climb), it may be more efficient to power the engine with liquid fuel. For example, during taxi, electric power may be more efficient, and thus the battery may be utilized to power the hybrid electric engine during taxi.

The gas turbine engine 20 can be coupled to an aircraft, as shown in FIG. 2, where the aircraft can include multiple instances of the gas turbine engine 20, which can be a hybrid electric turbine engine. Particularly, aircraft can be equipped with two or more hybrid electric turbine engines to provide thrust. Some gas turbine engines, such as hybrid electric gas turbine engines, are equipped with one or more electric machines to convert mechanical energy into electrical energy or vice versa. Two-spool hybrid electric engines can be configured with two electric machines: a first electric machine associated with the low speed spool and a second electric machine associated with the high speed spool. In the event of a failure of one of the electric machines, it may be desirable to distribute electricity from one of the other electric machines to a spool associated with the failed electric machine.

At various times throughout a flight, each engine has times it is adding extra power into its respective high speed spool using its respective high speed spool electric machine. At times, this extra power is obtained from the electric machine of the engine's low speed spool, for example as it extracts power from the low speed spool during an engine deceleration event. However, if the low speed spool's electric machine fails, it may be desirable to transfer power from another electric machine (from that engine or from another engine) as supplemental power. For example, if the low speed spool electric machine fails on a first engine, instead of using battery power, excess power from a second engine's low speed spool electric machine can be utilized. Similarly, if the high speed spool electric machine fails on the first engine when it is desirable to extract high-speed spool power, excess power from the first engine's low speed spool electric machine and/or excess power from another engine's low or high speed spool electric machine can be utilized. This can reduce the size and weight of one or more generators on an aircraft, due to reduced power margin built into each unit specifically to handle failure modes. In addition, if an engine shuts down, electric power from an electric machine of another engine can be used to feed a fan on the failed engine (e.g., the engine that is shut down). As another example, if an engine shuts down, electric power from another engine can be used for the purpose of spooling up for relight (restart) as an alternative (or assist) to a windmilling relight.

FIG. 2 illustrates an aircraft 200 including engines 220, 221 according to one or more embodiments described herein. In this example, the aircraft includes two gas turbine engines: engine 220 and engine 221. It should be appreciated that the aircraft can include other than two gas turbine engines (e.g., one gas turbine engine, three gas turbine engines, four gas turbine engines, etc.) and that the present description is not limited to two engines. One or more of the engines 220, 221 can be the engine 20 of FIG. 1A or a similar gas turbine engine. The engines 220, 221 are capable of providing thrust to propel the aircraft 200.

Each of the engines 220, 221 includes a high speed spool and a low speed spool as described in FIG. 1A. For example, the engine 220 includes a high speed spool 230 (e.g., the high speed spool 32 of FIG. 1A) and a low speed spool 232 (e.g., the low speed spool 30 of FIG. 1A). Similarly, the engine 221 includes a high speed spool 231 (e.g., the high speed spool 32 of FIG. 1A) and a low speed spool 233 (e.g., the low speed spool 30 of FIG. 1A).

According to one or more embodiments described herein, the engines 220, 221 are hybrid electric engines that can be powered by jet fuel and/or electricity. For example, each of the engines 220, 221 includes multiple electric machines that can 1) provide power to the engines 220, 221 and/or 2) can extract power to generate electricity to be used or stored in one or more batteries, which can be later used by the electric machines to provide power to the engines 220, 221 or to another device.

In FIG. 2, the engine 220 includes a high speed spool electric machine 240 to provide power to or extract power from the high speed spool 230 and a low speed spool electric machine 242 to provide power to or extract power from the low speed spool 232. Similarly, the engine 221 includes a high speed spool electric machine 241 to provide power to or extract power from the high speed spool 231 and a low speed spool electric machine 243 to provide power to or extract power from the low speed spool 233. In examples, the high speed spool electric machines 240, 242 are each about 0.5 megawatt rated electric machines while the low speed spool electric machines 241, 243 are about 1.0 megawatt rated electric machines. It should be appreciated that other capacity electric machines are possible and are within the scope of the present description.

The aircraft 200 can also include the hybrid electric controller 210, which can control which of the electric machines are operating at a particular time. The hybrid electric controller 210 can also direct electricity from one of the electric machines to another of the spools, such that power can be transferred electrically from one spool to another. The hybrid electric controller 210 can also direct electricity from one of the electric machines to another of the engines, such as upon a failure of one of the other electric machines. It should be appreciated that the hybrid electric controller 210 can be mounted within or on the aircraft 200, mounted on or in one or more of the engines 220, 221 (e.g., on a fan case of one or more of the engines 220, 221), or mounted/installed at another suitable location.

In examples, the hybrid electric controller 210 is a full authority digital controller that includes processing circuitry 212 and a memory system 214 configured to store a plurality of configuration items, where at least one of the configuration items includes a sequence of the computer executable instructions for execution by the processing circuitry 212. Other types of configuration items can include data, such as trim constants, configurable data, and/or fault data. Examples of computer executable instructions can include boot software, operating system software, and/or application software. The executable instructions may be stored or organized in any manner and at any level of abstraction, such as in connection with controlling and/or monitoring operation of the gas turbine engines 220, 221 and their associated electric machines. The processing circuitry 212 can be any type or combination of central processing unit (CPU), including one or more of: a microprocessor, a digital signal processor (DSP), a microcontroller, an application specific integrated circuit (ASIC), a field programmable gate array (FPGA), or the like. Also, in embodiments, the memory system 214 may include volatile memory, such as random access memory (RAM), and non-volatile memory, such as Flash memory, read only memory (ROM), and/or other electronic, optical, magnetic, or any other computer readable medium onto which is stored data and algorithms in a non-transitory form.

The controller monitors the engines 220, 221 to detect a failed electric machine. Responsive to detecting the failed electric machine, the controller can cause power to be distributed from one or more other, non-failed electric machines to a spool that was receiving power from the failed electric machine. For example, if the low speed spool electric machine 242 was supplying power to the high speed spool 230 (via the high speed spool electric machine 240) and fails, power from the other low speed spool electric machine 243 can be transferred (distributed) to power the high speed spool 230. As another example, if the low speed spool electric machine 243 fails, power from the other low speed spool electric machine 242 can be transferred (distributed) to power the high speed spool 231.

As yet another example, if the high speed spool electric machine 241 is supplying a load (such as a low speed spool electric machine or other aircraft or engine load) and fails, power from the other high speed spool electric machine 240 can be transferred (distributed) to power the load (e.g., low speed spool 233). As another example, if the high speed spool electric machine 240 fails, power from the other high speed spool electric machine 241 can be transferred (distributed) to power the low speed spool 232.

These and other examples are possible, as are various combinations of how power can be distributed from one or more other electric machines to a spool that was receiving power from a failed electric machine. In the case of additional engines (e.g., 3 engines, 4 engines, etc.), similar power distribution between the engines is possible.

Referring now to FIG. 3 with continued reference to FIGS. 1 and 2, FIG. 3 is a flow chart illustrating a method 300 for hybrid electric engine power distribution according to one or more embodiments described herein. The method 300 may be performed, for example, by the hybrid electric controller 210 of FIG. 2, the FADEC 156 of FIG. 1B, and/or another suitable device.

At block 302, the hybrid electric controller 210 monitors multiple gas turbine engines (e.g., the engines 220, 221) of the aircraft. As shown in FIG. 2, the engine 220 includes the high speed spool 230 having the high speed spool electric machine 240 associated therewith and includes the low speed spool 232 having the low speed spool electric machine 242 associated therewith. Similarly, the engine 221 includes the high speed spool 231 having the high speed spool electric machine 241 associated therewith and includes the low speed spool 233 having the low speed spool electric machine 243 associated therewith

At block 304, the hybrid electric controller 210 determines that one of the electric machines (e.g., one of the high speed spool electric machine 240, the low speed spool electric machine 242, the high speed spool electric machine 241, or the low speed spool electric machine 243) experiences a failure. A failure can be any type of event that occurs that causes the electric machine to stop or reduce generating electrical power from its associated spool.

At block 306, the hybrid electric controller 210, responsive to detecting the failed electric machine at block 304, distributes power from another electric machine to a spool associated with another hybrid electric turbine engine of the aircraft. Various combinations of power distribution from one or more non-failed electric machines to another spool are possible as described herein. The following are some examples, but other examples are also possible.

In one or more embodiments, the hybrid electric controller 210 can determine what mode the electric machine was operating upon the occurrence of the failure. A typical operation is not extraction of power from both spools but rather extraction of power from the low spool and supply power to the high spool. There can be excess power from the low spool for other loads. There can also be power augmentation to the low spool to increase thrust. If the failed electric machine was operating in a power extracting mode to supply power elsewhere in that engine or on the aircraft, another electric machine (e.g., the low speed electric machine) on the other engine can be activated to supply that load. On the other hand, if the failed electric machine was operating in a power augmenting mode, the FADEC 156 may take action to stabilize combustion, which may include slowing down the engine or reducing the power extraction from that engine. In that case, more power may be supplied from the other engine.

Particularly, distributing the power can be performed in different ways. For example, responsive to the failed electric machine being one of the low speed spool electric machines, power is distributed from the low speed spool electric machine of another of the multiple hybrid electric turbine engines. As another example, responsive to the failed electric machine being one of the high speed spool electric machines, power is distributed from the high speed spool electric machine of another of the multiple hybrid electric turbine engines. As another example, responsive to the failed electric machine being one of the low speed spool electric machines, power is distributed from the low speed spool electric machine and the high speed spool electric machine of another of the multiple hybrid electric turbine engines.

Additional examples are also possible. For example, responsive to the failed electric machine being one of the low speed spool electric machines, power is distributed from multiple low speed spool electric machines of the other multiple hybrid electric turbine engines. As another example, responsive to the failed electric machine being one of the low speed spool electric machines, power is distributed from the high speed spool electric machine of the same hybrid electric turbine engine and from multiple low speed spool electric machines of the other multiple hybrid electric turbine engines.

While the above description has described the flow process of FIG. 3 in a particular order, it should be appreciated that unless otherwise specifically required in the attached claims that the ordering of the steps may be varied.

An advantage of one or more embodiments described herein includes the ability to reduce the size and weight of one or more generators on an aircraft due to reduced power margin built into each unit specifically to handle failure modes. Another advantage of one or more embodiments is that if an engine shuts down, electric power from an electric machine of another engine can be used to feed a fan on the failed engine (i.e., the engine that is shut down) in a case where it is desired to reduce windmill drag.

Another advantage of one or more embodiments is that if an engine shuts down, electric power from another engine can be used for the purpose of spooling up for relight (restart) of the shutdown engine as an alternative (or assist) to a windmilling relight. For example, one or more of the electric machines (e.g., the high speed spool electric machine 240, the low speed spool electric machine 242, the high speed spool electric machine 241, the low speed spool electric machine 243, etc.) can assist with performing an engine start or restart on the ground or at altitude. In this way, one or more of the electric machines takes the place of an air turbine starter (ATS), which can reduce weight and complexity.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method comprising:
monitoring a first hybrid electric turbine engine of an aircraft, the first hybrid electric turbine engine comprising a first high speed spool electric machine associated with a first high speed spool and a first low speed spool electric machine associated with a first low speed spool;
determining that an electric machine is a failed electric machine, the failed electric machine being an electric machine on a second hybrid electric turbine engine of the aircraft; and
responsive to detecting the failed electric machine, distributing power to a spool associated with the second hybrid electric turbine engine of the aircraft.

2. The method of claim 1, wherein the monitoring comprises monitoring multiple hybrid electric turbine engines of the aircraft by one or more hybrid electric controllers, and each of the multiple hybrid electric turbine engines comprises a high speed spool electric machine associated with a high speed spool and a low speed spool electric machine associated with a low speed spool.

3. The method of claim 2, wherein distributing the power further comprises, responsive to the failed electric machine being the high speed spool electric machine of the second hybrid electric turbine engine, distributing power from the low speed spool electric machine of the second hybrid electric turbine engine.

4. The method of claim 2, wherein distributing the power further comprises, responsive to the failed electric machine being the high speed spool electric machine of the second hybrid electric turbine engine, distributing power from a low speed spool electric machine of the first hybrid electric turbine engine.

5. The method of claim 2, wherein distributing the power further comprises, responsive to the failed electric machine being the high speed spool electric machine of the second hybrid electric turbine engine, distributing power from the low speed spool electric machine of the second hybrid electric turbine engine and from a low speed spool electric machine of the first hybrid electric turbine engine.

6. The method of claim 2, wherein distributing the power further comprises, responsive to the failed electric machine being the high speed spool electric machine of the second hybrid electric turbine engine, distributing power from the low speed spool electric machine of second hybrid electric turbine engine and from a low speed spool electric machine and a high speed spool electric machine of the first hybrid electric turbine engine.

7. The method of claim 2, wherein distributing the power further comprises, responsive to the failed electric machine being the low speed spool electric machine of the second hybrid electric turbine engine, distributing power from the high speed spool electric machine of the second hybrid electric turbine engine.

8. The method of claim 2, wherein distributing the power further comprises, responsive to the failed electric machine being the low speed spool electric machine of the second hybrid electric turbine engine, distributing power from the low speed spool electric machine of the first hybrid electric turbine engine.

9. The method of claim 2, wherein distributing the power further comprises, responsive to the failed electric machine being the low speed spool electric machine of the second hybrid electric turbine engine, distributing power from the high speed spool electric machine of the second hybrid electric turbine engine and from a low speed spool electric machine of the first hybrid electric turbine engine.

10. The method of claim 2, wherein distributing the power further comprises, responsive to the failed electric machine being the low speed spool electric machine of the second hybrid electric turbine engine, distributing power from the high speed spool electric machine of second hybrid electric turbine engine and from a high speed spool electric machine of the first hybrid electric turbine engine.

11. The method of any preceding claim, further comprising:
detecting that one of the first or second hybrid electric turbine engines is shut down; and
distributing second power to the one of the hybrid electric turbine engine that is shut down from at least one electric machine of at least one of the hybrid electric turbine engines that is not shut down, and wherein optionally:
the one of the hybrid electric turbine engines that is shut down uses the second power from the at least one electric machine of another of the hybrid electric turbine engines that is not shut down to:
feed a fan of the one of the hybrid electric turbine engines that is shut down; or
restart the one of the hybrid electric turbine engines that is shut down, and optionally wherein the second power is used instead of power from an air turbine starter.

12. The method of any preceding claim, wherein the detecting the failed electric machine is performed by a controller associated with the aircraft.

13. A system comprising:
a first hybrid electric engine comprising a first electric machine associated with a first shaft and a second electric machine associated with a second shaft;
a second hybrid electric engine comprising a third electric machine associated with a third shaft and a fourth electric machine associated with a fourth shaft; and
a controller to:
identify a failed electric machine, the failed electric machine being one of the first electric machine, the second electric machine, the third electric machine, or the fourth electric machine; and
cause power to be distributed from at least one of the first electric machine, the second electric machine, the third electric machine, or the fourth electric machine other than the failed electric machine to another of the first electric machine, the second electric machine, the third electric machine and the fourth electric machine other than the failed electric machine, and optionally:
further comprising a bus to transmit data and received data among the controller, the first electric machine, the second electric machine, the third electric machine, and the fourth electric machine; and/or
wherein the controller is further configured to perform an engine restart on at least one of the first hybrid electric engine or the second hybrid electric engine responsive to detecting that the respective first hybrid electric engine or the second hybrid electric engine has experienced a shutdown.

14. A controller comprising processing circuitry configured to:
monitor multiple hybrid electric turbine engines of an aircraft, each of the multiple hybrid electric turbine engines comprising a high speed spool electric machine associated with a high speed spool and a low speed spool electric machine associated with a low speed spool;
detect a failed electric machine, the failed electric machine being one of the high speed spool electric machine or the low speed spool electric machine associated with one of the multiple hybrid electric turbine engines; and
responsive to detecting the failed electric machine, distribute power from at least one other electric machine of the multiple hybrid electric turbine engines to a spool associated with another electric machine other than the failed electric machine, optionally to distribute power to the failed electric machine from one or more of the high speed spool electric machines, alone or together.

15. The controller of claim 14, wherein the circuitry is configured to, responsive to the failed electric machine being one of the high speed spool electric machines:
distribute power from the low speed spool electric machine of the same hybrid electric turbine engine;
distribute power from the low speed spool electric machine of another of the multiple hybrid electric turbine engines;
distribute power from the low speed spool electric machine of the same hybrid electric turbine engine and from the low speed spool electric machine of another of the multiple hybrid electric turbine engines; and/or
distribute power from the low speed spool electric machine of same hybrid electric turbine engine and from the low speed spool electric machine and the high speed spool electric machine of another of the multiple hybrid electric turbine engines.
